(19) Europäisches Patentamt / European Patent Office / Office européen des brevets

(11) **EP 4 512 695 A1**

(12) **EUROPEAN PATENT APPLICATION**
published in accordance with Art. 153(4) EPC

(43) Date of publication:
**26.02.2025 Bulletin 2025/09**

(21) Application number: **23791775.2**

(22) Date of filing: **13.04.2023**

(51) International Patent Classification (IPC):
**B62D 6/00** (2006.01)      **B60W 40/114** (2012.01)
**B60W 40/12** (2012.01)      **B60W 60/00** (2020.01)

(52) Cooperative Patent Classification (CPC):
**B60W 40/114; B60W 40/12; B60W 60/00; B62D 6/00**

(86) International application number:
**PCT/JP2023/014973**

(87) International publication number:
**WO 2023/204127 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.04.2022 JP 2022069844**

(71) Applicant: **IHI Corporation**
**Tokyo 135-8710 (JP)**

(72) Inventor: **TAGAWA Satoru**
**Tokyo 135-8710 (JP)**

(74) Representative: **TBK**
**Bavariaring 4-6**
**80336 München (DE)**

(54) **TURNING CHARACTERISTIC SETTING METHOD OF AUTOMATIC VEHICLE DRIVING SYSTEM AND AUTOMATIC VEHICLE DRIVING SYSTEM**

(57)      In a setting method of turning characteristics of an automated vehicle driving system, driving patterns for acquisition of a parameter of turning characteristics are generated automatically (step S4). Data concerning the turning characteristics of a vehicle is acquired through automated driving of the vehicle with the generated driving patterns (step S5). The parameter is set based on the acquired data (step S6).

FIG. 7

EP 4 512 695 A1

## Description

### TECHNICAL FIELD

The present disclosure relates to a setting method of turning characteristics of an automated vehicle driving system and an automated vehicle driving system.

### BACKGROUND ART

An automated vehicle driving system as disclosed in a Non-patent Literature 1 listed below is known. The system disclosed in the Non-patent Literature 1 includes a robot that operates a steering wheel, a robot that operates an accelerator pedal and a brake pedal, a robot that operates a gear selector, and a controller that controls these robots. These robots are used by being attached to a vehicle and can be removed from the vehicle. Also known is an automated vehicle driving system as disclosed in a Patent Literature 1 listed below. In the Patent Literature 1, an automated steering control related to vehicle turning is mainly disclosed.

### CITATION LIST

NON-PATENT LITERATURE

Non-patent Literature 1: "NaviControl: GPS-controlled real vehicle driving test robot", manufactured by HI-TEC s.r.l., dealt (in Japan) by TOYO Corporation, [online], [retrieved February 19, 2022], Internet, <URL: https://www.toyo.co.jp/mecha/products/detail/navicontrol.html>

PATENT LITERATURE

Patent Literature 1: Japanese Patent Application Publication No. 2017-177847

### SUMMARY OF THE INVENTION

PROBLEM TO BE SOLVED

In an automated steering control of an automated driving system, an actuator steers steered road wheels for turning. In the system disclosed in the Non-Patent Document 1, when an actuator of the robot rotates a steering wheel, steered road wheels are steered through a steering mechanism including a steering column shaft and a steering gear box. In practical application of such a system, a calibration process is needed. More specifically, it is needed to set a parameter of an automated steering control concerning turning characteristics of a vehicle.

An object of the present disclosure is to provide a setting method of turning characteristics of an automated vehicle driving system and an automated vehicle driving system, which can efficiently set a parameter of an automated steering control concerning turning characteristics of a vehicle in a calibration process of the automated steering control.

SOLUTION TO PROBLEM

In a setting method of turning characteristics of an automated vehicle driving system according to the present disclosure, driving patterns for acquisition of a parameter of turning characteristics is automatically generated, data concerning the turning characteristics of a vehicle is acquired through automated driving of the vehicle with the generated driving patterns; and the parameter is set based on the acquired data.

Here, the vehicle automated driving system is configured by installing an automated driving robot on the vehicle.

In addition, a driving area for the automated driving with the driving patterns may be acquired by driver's driving of the vehicle along a perimeter of the driving area before automatically generating the driving patterns to generate the driving patterns automatically in the driving area.

Here, the parameter may be a turning curvature or a turning radius of the vehicle relative to a steering angle of a steering wheel of the vehicle.

The parameter may be a yaw rate of the vehicle relative to a steering angle of a steering wheel of the vehicle.

The parameter may be a time constant for a response delay of a yaw rate of the vehicle.

The parameter may be a stability factor concerning turning of the vehicle.

And, an automated vehicle driving system according to the present disclosure includes a steering robot that rotates a steering wheel of a vehicle, a self-position detecting device that detects a self-position of the vehicle, and a controller that controls the automated vehicle driving system, wherein the controller is configured to automatically generate driving patterns for acquisition of a parameter of turning characteristics, to acquire data concerning the turning characteristics of the vehicle by using the self-position detecting device while driving the vehicle automatedly with the generated driving patterns by controlling the steering robot, and to set the parameter based on the acquired data.

Here, the steering robot may be post-installed on the vehicle.

ADVANTAGEOUS EFFECT

According to the setting method of turning characteristics of an automated vehicle driving system or the automated vehicle driving system in the present disclosure, a parameter of an automated steering control concerning turning characteristics of a vehicle can be set efficiently in a calibration process of the automated steering control.

**BRIEF DESCRIPTION OF DRAWINGS**

[FIG. 1] Fig. 1 is a perspective view showing a configuration of an automated vehicle driving system according to an embodiment.
[FIG. 2] Fig. 2 is a plan view showing steps of a setting method of turning characteristics for the system (setting of a driving area).
[FIG. 3] Fig. 3 is a plan view showing the steps (travelling to a start position).
[FIG. 4] Fig. 4 is a plan view showing the steps (automated driving step: large turning curvature).
[FIG. 5] Fig. 5 is a plan view showing the steps (automated driving step: small turning curvature).
[FIG. 6] Fig. 6 is a graph showing a parameter of an automated steering control that has been set (turning curvature with respect to steering angle).
[FIG. 7] Fig. 7 is a flowchart of the above setting method.
[FIG. 8] Fig. 8 is a graph showing a parameter of an automated steering control in another example (yaw rate with respect to steering angle).

**DESCRIPTION OF EMBODIMENTS**

Hereinafter, an embodiment of an automated vehicle driving system and a setting method of turning characteristics that uses the system will be described with reference to the drawings.

The automated vehicle driving system according to the present embodiment is a system in which post-installed automated driving robots like as described in the above [Non-patent Literature 1] are installed on an existing vehicle 1. In other words, since the post-installed type automated driving robots are installed on the vehicle 1, a calibration process of the automated steering control is needed after the automated driving robots are installed. The calibration process sets a parameter of the automated steering control concerning turning characteristics of the vehicle 1. The turning characteristics are the characteristics relating to the turning of the vehicle 1, and specifically, various state quantities relating to the turning of the vehicle 1, such as a turning curvature, a turning radius, a yaw rate, its time constant or a stability factor, or various intrinsic values that affect the turning performance of the vehicle 1.

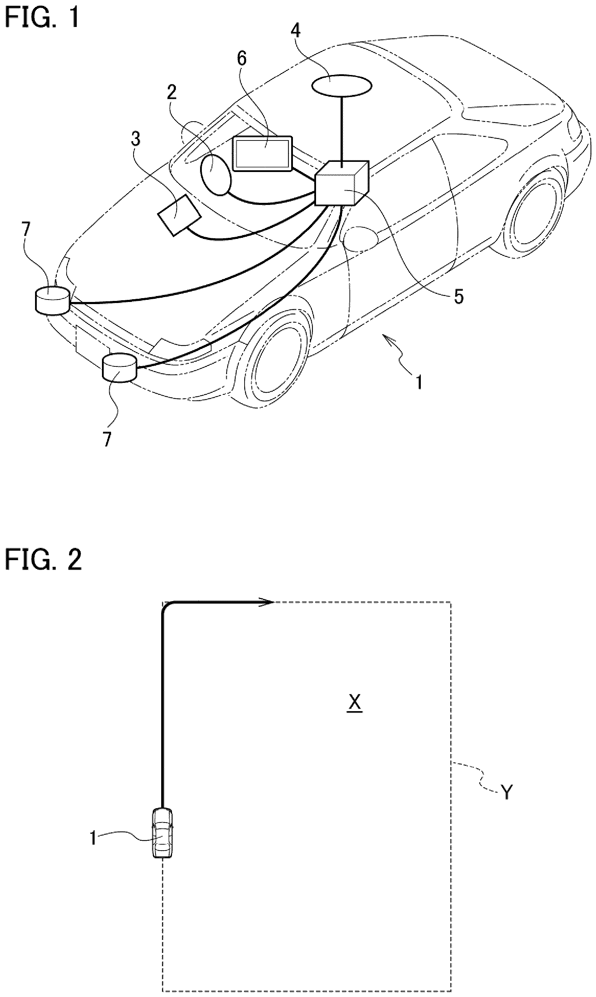

The vehicle 1 in the present embodiment has a configuration shown in Fig. 1. Automated driving robots that can be post-installed on a vehicle to enable remote driving or automated driving are installed on the vehicle 1. The automated driving robots include a steering robot 2 that rotates a steering wheel, a pedal robot 3 that operates an accelerator pedal and a brake pedal, a self-position detecting device 4 that detects a self-position of the vehicle 1 and a controller 5 that controls these robots. The steering robot 2, the pedal robot 3 and the self-position detecting device 4 are connected to the controller 5.

The controller 5 is also connected to a Graphical User Interface (GUI) unit 6, which displays various information about the system and serves as an input device for various instructions to the controller 5. The controller 5 is also connected to obstacle detection sensors 7. The system in the present embodiment is also equipped with a gear robot (not shown) that operates a gear selector, and the gear robot is also connected to controller 5. These robots are cooperatively controlled by the controller 5.

The vehicle 1 is capable of performing remote driving or automated driving by the above-mentioned automated driving robot without a passenger on board. However, a passenger, i.e., a driver, can ride in a driver's seat of the vehicle 1 while the automated driving robot is still installed, or a driver can drive it without activating the automated driving robot. The driver can also drive it with the automated driving robot activated, and various data can be recorded at that time.

The steering robot 2 can take various forms, but in the present embodiment, for example, it includes a ring member that is attached to a rim of the steering wheel to be rotated together with the steering wheel. When the driver drives the vehicle 1 as described above, the driver operates the ring member as if it were the rim of the steering wheel. The ring member is fixed to the vehicle body via a bracket or the like and is rotated by an actuator of the steering robot 2. As mentioned above, the steering robot 2 can take various forms, so it can be attached to the steering wheel or directly manipulate the rim of the steering wheel.

The pedal Robot 3 can also take various forms, but in the present embodiment it includes actuators for pushing the pedals and is fixed between a seat cushion of the driver's seat and the pedals. The actuators of the steering robot 2 and the pedal robot 3 are controlled by the controller 5.

The self-positioning detecting device 4 is generally a device that combines a satellite positioning system, such as a GPS (Global Positioning System) and so on, with an Inertial Measurement Unit (IMU), for example. The controller 5 is an electronic device including a CPU, a ROM, a RAM, a storage such as an SSD or an HDD and I/O devices. The GUI unit 6 in the present embodiment is a tablet-type terminal with a touch screen. The obstacle detection sensors 7 are ultrasonic sensors mounted on a front end of the vehicle 1 in the present embodiment, but other types of sensors may be used, and their mounting positions are not limited to the front end of the vehicle 1.

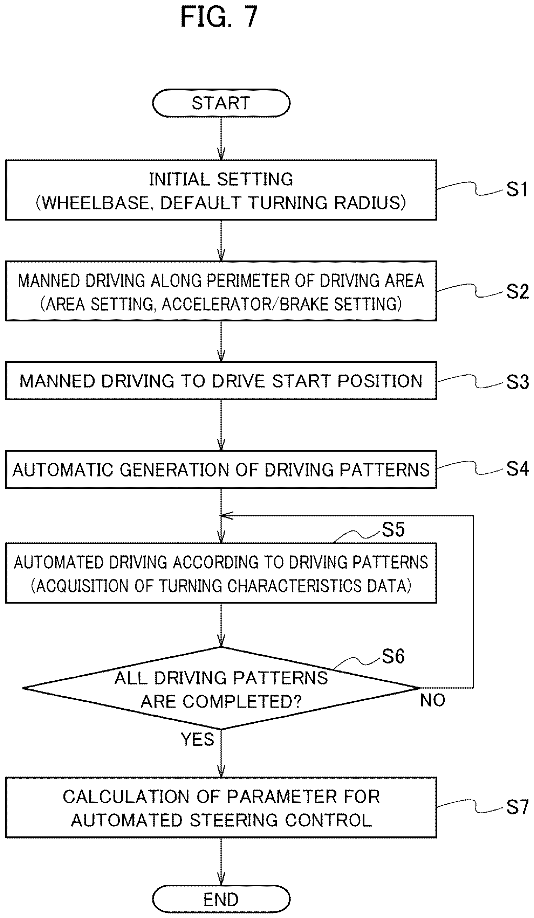

Next, parameter setting for the automated steering control during the above-mentioned calibration process of the system will be explained with reference to the plan views in Figs. 2 to 5, the flowchart in Fig. 7 and so on.

First, in the present embodiment, the above-mentioned post-installed type automated driving robots are installed on the vehicle 1. That is, the steering robot 2, the pedal robot 3, the gear robot, the controller 5, the GUI unit 6 and so on, which are described above, are installed on vehicle 1. Next, various specifications inherent in the vehicle 1, such as a wheelbase and so on, are input into the system from the GUI unit 6. Here, a default turning radius estimated from the vehicle specifications is also input (step S1 in Fig. 7). The input information is stored in the storage of the controller 5

Note that the specifications of the vehicle 1 may be input as numerical values or, if the system stores a vehicle database, the vehicle type may be input. In this case, the controller 5 retrieves the vehicle specifications compatible with the vehicle type from the database based on the input vehicle type. In addition, if a maximum steering angle of the steering wheel and a minimum turning radius are known, these values are also input.

In the present embodiment, the default turning radius is calculated by using an Expression (1) shown below that is a two-wheeled vehicle kinematics model, or the like. It is well known to study vehicle dynamics by using the two-wheeled vehicle kinematics model in a simulated manner instead of a four-wheeled vehicle kinematics model, and the default turning radius is calculated by using the two-wheeled vehicle kinematics model in the present embodiment.

$$\delta s = K\tan^{-1}(L/R) = K\tan^{-1}(\kappa L) \qquad \text{Expression (1)}$$

Here, $\delta s$ is the steering angle, K is a steering gear ratio, L is the wheelbase value, R is the turning radius, and $\kappa$ is a turning curvature radius. The turning radius R and turning curvature radius $\kappa$ have an inverse relationship. Note that, in a case where a steered angle of the steered road wheel, i.e., the front wheels, can be obtained and the steering gear ratio K is obvious, the default turning radius may be determined by using the steered angle $\delta$ of the steered road wheels ($K\delta = \delta s$) instead of the steering angle $\delta s$ of the steering wheel. In this way, the initial settings for the calibration process are made.

Then, data concerning the turning characteristics of the vehicle 1 is acquired automatically through the automated driving of the vehicle 1, and the parameter of the automated steering control is set based on the acquired data. However, it is needed for the automated driving to input a driving area X for the automated driving to the system. Therefore, the driver actually drives the vehicle 1 along a perimeter Y of the driving area X as shown in Fig. 2 (step S2 in Fig. 7). At this time, a travelling path of the vehicle 1 is detected by the self-positioning detection device 4 and becomes a closed path. The inside of the closed path is determined as the driving area X in which the automated driving of the vehicle 1 is done for the calibration process through the automated driving.

At this time, the vehicle 1 is driven at a slow speed (about 5 km/h), for example. In Fig. 2, the driving area X is a simple rectangle, but even if the driving area X has a more complicated shape, the driving area X can be set accurately and simply by driving the vehicle 1 along its perimeter. Both the self-position detection of the vehicle 1 for setting the driving area X and the self-position detection of the vehicle 1 during the automated driving done just after that are performed by the same self-position detection device 4. Therefore, the automated driving done just after setting the driving area X can be done reliably. In addition, during actual driving by the driver along this perimeter Y, data concerning the acceleration/deceleration characteristics of the vehicle 1 in response to the pedal operation is also simultaneously acquired and stored in the controller 5.

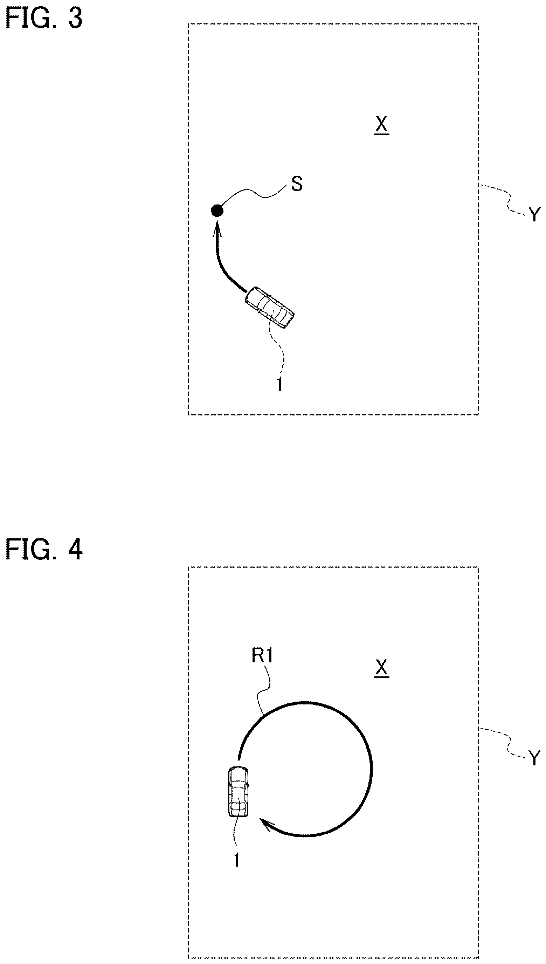

After the driving area X has been set, the vehicle 1 is maneuvered to a start position S as shown in Fig. 3. Specifically, a map of the driving area X is shown on the GUI unit 6 as in a navigation system to show the vehicle 1 and the start position S in the map, and the driver carries the vehicle 1 to the start position S by referring to the GUI unit 6 (step S3 in Fig. 7). A position where a circular travelling path having a maximum radius can be placed within the driving area X is determined as the start position S through the calculation of the controller 5. However, the start position S can also be set arbitrarily by the driver (user) through the GUI unit 6.

Next, plural driving patterns are automatically generated to acquire the data concerning the turning characteristics of the vehicle 1 within the driving area X (step S4 in Fig. 7). For example, in the present embodiment, the turning curvature relative to the steering angle of the steering wheel is acquired as the turning characteristics, and driving patterns are generated for every 10 degrees of the steering angle as shown in [Table 1] below. Note that positive values for the steering angle in the Table 1 indicate a right turn and negative values indicate a left turn. In addition, the above-mentioned default turning radii are also shown in the [Table 1].

[Table 1]

| Steer Angle [deg] | Turning Radius [m] (Default Value) | Turning Radius [m] (Measured Value) | Turning Curvature [m$^{-1}$] (Measured Value) |
|---|---|---|---|
| 720 | 4.80 | 4.91 | 0.20 |
| 710 | 4.88 | 4.85 | 0.21 |
| ⋮ | ⋮ | ⋮ | ⋮ |
| 45 | 85.91 | Not Measured | Not Measured |
| ⋮ | ⋮ | ⋮ | ⋮ |
| -710 | 4.88 | Not Measured | Not Measured |
| -720 | 4.80 | Not Measured | Not Measured |

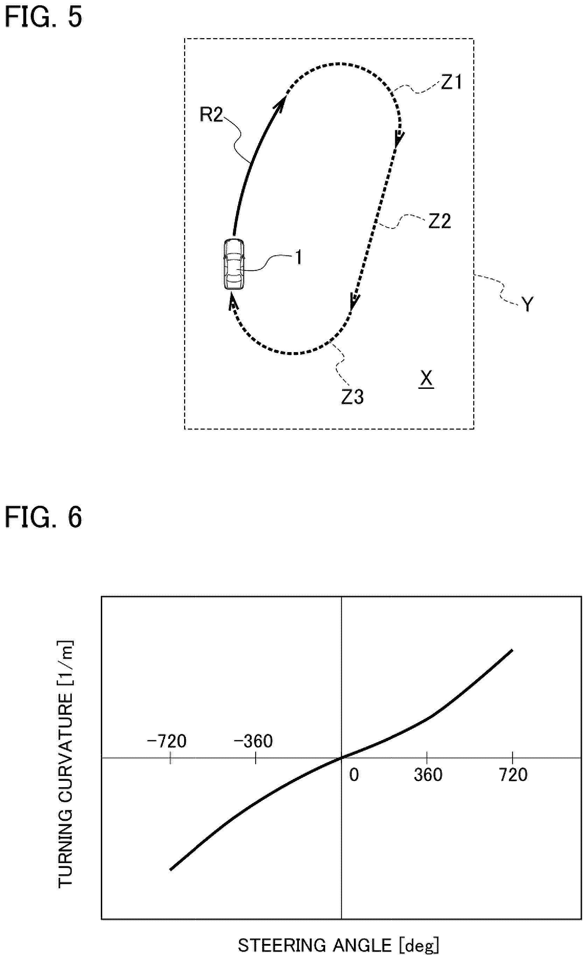

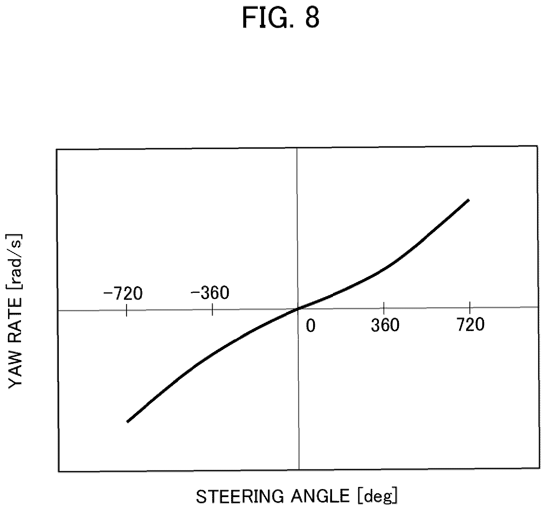

Each travelling route is automatically generated so that the route fits within the pre-determined driving area X. For example, as shown by a driving route R1 in Fig. 4, if the steering angle is large and the turning radius is small, it is possible to make a full circle within the driving area X and return to the start position S. However, as shown by a travelling route R2 in Fig. 5, if the steering angle is small and the turning radius is large, it is not possible to make a full circle within the driving area X. In such a case, travelling routes Z1-Z3 are generated by using a route generation method with straight lines and arcs, such as Dubins path, for a return to the start position S done after the travelling route R2 by which a turn with a predetermined steering angle is done for the data acquisition. Here, the semicircular travelling route Z1, the straight travelling route Z2 and the semicircular travelling route Z3 constitute the return route to the start position S. When shifting from a right-turn travelling route to a left-turn travelling route, the return route is generated so that the travel direction from the start position S is made reversed. In this way, all the travelling routes are automatically generated.
Once all the travelling routes have been determined, automated driving based on the travelling routes is sequentially done by unmanned driving, i.e., automated driving, to acquire the data concerning the turning characteristics (steps S5 and S6 in Fig. 7). The automated driving starts from the travelling route with a large steering angles, i.e., a small turning radius. By these processes, the unmeasured data in the above-mentioned [Table 1] are sequentially measured to fill the table.
After all the data has been acquired, the parameter for automated turning control is calculated based on the acquired data as shown in Fig. 6 (step S7 in Fig. 7). In the present embodiment, the parameter to be calculated is a characteristic curve on a graph showing the relationship between the steering angle and the turning curvature as shown in Fig. 6. As mentioned above, the acquired data is made for every 10 degrees of the steering angle. Therefore, in generating the map shown in Fig. 6, the characteristic curve is generated by using the least-squares method or the like. Note that, based on the generated parameter, the coefficients and the eigenvalues in the above Expression (1) may be modified to reset the default values for which no data was acquired. In addition, in the present embodiment, the data was acquired for both right and left turns, but the data for one may be used to generate data for the other.
In addition, in the steps S5 and S6, deviation between the acquired data and the default values may be monitored, and if the deviation is large, the data acquisition may be interrupted. Furthermore, in the steps S5 and S6, the self-position of the vehicle 1 is always known by the controller 5 via the self-position detecting device 4 for the above-mentioned data acquisition. Therefore, the controller 5 may output an error if deviation from the driving area X occurs or if an obstacle is detected by the obstacle detection sensors 7. If an error is output in this manner, the user is presented with a request for a return of the vehicle 1 to the start position S. As explained above, the calibration process for the automated turning control is completed, and then the automated driving is properly performed.
Note that, in the above embodiment, the characteristic curve of the turning curvature with respect to the steering angle shown in Fig. 6 is set as the parameter of the automated steering control. However, other parameters may be set. For example, as shown in Fig. 8, a characteristic curve of a yaw rate with respect to the steering angle may be set as the parameter of the automated steering control. In this case, the yaw rate is also acquired as the data in the above-mentioned automated driving in the steps S5 and S6. In the present embodiment, the yaw rate can be detected by the self-position detecting device 4 that includes the GPS and the IMU.

Alternatively, a time constant for a response delay of the yaw rate may be set as the parameter for the automated turning control. Especially in the system using the post-installed type automated driving robots like as the present embodiment, the response delay are likely to occur. Therefore, the automated driving can be performed appropriately by setting the time constant for the response delay as the parameter and using the parameter for the subsequent automated turning control. Also in this case, the yaw rate is acquired as the data in the automated driving of the steps S5 and S6, and the time constant is calculated based on the data.

Alternatively, a stability factor of the vehicle 1 may be set as the parameter of the automated turning control. The stability factor A can be calculated from an Expression (2) shown below.

$$R = (1+AV^2)KL/\delta s \qquad \text{Expression (2)}$$

Here, A is the stability factor, V is a travel speed, $\delta s$ is the steering angle, K is the steering gear ratio, L is the wheelbase value, and R is the turning radius.

The stability factor A is an indicator of the steer characteristics of the vehicle 1, and its value can tell whether the vehicle 1 has a tendency to oversteer or understeer. In this case, the turning radius is acquired while the travelling speed is changed by controlling the accelerator pedal in the above-mentioned automated driving in the steps S5 and S6. Note that the parameter of the automated turning control to be set is not limited to one, and two or more parameters may be set at the same time.

According to the setting method of the turning characteristics of the automated vehicle driving system in the present embodiment, (a) driving patterns for acquisition of the parameter of the turning characteristics are automatically generated. Then, (b) the data concerning the turning characteristics of the vehicle 1 is acquired through the automated driving of the vehicle 1 with the generated driving patterns. (c) The parameter concerning the turning characteristics is set based on the acquired data. Thus, the parameter of the automated steering control concerning the turning characteristics of the vehicle 1 can be set efficiently in the calibration process of the automated steering control.

For example, if a company owns a large number of vehicles and wishes automated driving of these vehicles, it becomes possible to perform a calibration process for each vehicle efficiently. Even if vehicle types are not identical and are different, the calibration process can be performed efficiently for each vehicle.

In particular, in a case where an automated driving system is configured by installing an automated driving robot, such as the steering robot 2, on a vehicle 1 like as in the above embodiment, its calibration process has to be done for each vehicle 1. Therefore, its parameter of turning characteristics can be set for each vehicle 1 very efficiently by using the above-mentioned procedures (a) to (c).

According to the setting method of the turning characteristics of the automated vehicle driving system in the above embodiment, the driving area X for the automated driving with the driving patters is acquired by driver's driving of the vehicle 1 along a perimeter Y of the driving area X before automatically generating the driving patterns. Then, the driving patterns are automatically generated in the driving area X. There is no problem in a case where a very large flat area can be prepared as the driving area X used in the calibration process, but in many cases it is difficult to prepare such a driving area X. In addition, the shape of the driving area X may vary, but the subsequent automatic generation of the travelling routes can also be done reliably because the driving area X can be determined easily and reliably.

In a case where the parameter is the turning curvature or the turning radius of the vehicle 1 relative to the steering angle of the steering wheel of the vehicle 1, the output of the automated steering control, i.e., the turning curvature or the turning radius, can be reliably controlled in relation to the input of the automated steering control, i.e., the steering angle.

In a case where the parameter is the yaw rate of the vehicle 1 relative to the steering angle of the steering wheel of the vehicle 1, the output of the automated steering control, i.e., the yaw rate, can be reliably controlled relative to the input of the automated steering control, i.e., the steering angle.

In a case where the parameter is the time constant for the response delay of the yaw rate of the vehicle 1, reliable automated steering control can be performed in consideration of the response delay. The system using the post-installed type automated driving robots is prone to response delays as described above, so the automated driving can be performed appropriately by setting the time constant for the response delay as the parameter and using this parameter for the subsequent automated turning control.

In a case where the parameter is a stability factor concerning the vehicle's turning, the automated steering control can be performed reliably in consideration of the steer characteristics of the vehicle 1.

The automated vehicle driving system according to the above embodiment includes the steering robot 2 that rotates the steering wheel of the vehicle 1, the self-position detecting device 4 that detects the self-position of the vehicle 1, and the controller 5 that controls the system. The controller 5 automatically generates the driving patterns for the acquisition of the parameter of the turning characteristics. The controller 5 acquires the data concerning the turning characteristics of the vehicle 1 by using the self-position detecting device 4 while driving the vehicle 1 automatedly with the generated driving patterns by controlling the steering robot 2. The controller 5 sets the parameter based on the acquired data. Therefore, according to the automated vehicle driving system in the above embodiment, the parameter of the automated steering control concerning the turning characteristics of the vehicle 1 can be set efficiently in the calibration process of the automated steering control.

In particular, in a case where a steering robot is post-installed on a vehicle like as in the above embodiment, its calibration process has to be done for each vehicle 1. Therefore, according to the automated vehicle driving system in the above embodiment, the parameter of the turning characteristics can be set for each vehicle 1 very efficiently.

Note that the automated vehicle driving system is realized by installing the post-installed type automated driving robot on the vehicle in the above embodiment. However, the automated vehicle driving systems of the present disclosure also include a system in which an automated driving system is integrated into a vehicle itself. Even for such a system integrated into a vehicle, its calibration process, i.e., setting of a parameter of its automated driving control concerning turning characteristics, is needed. In this case, since an automated driving robot is not installed, an operated angle of a steering wheel and operated strokes of an accelerator pedal and a brake pedal are detected by respective detection sensors installed in the vehicle when setting the parameter of the automated steering control.

The yaw rate is acquired by the self-position detecting device 4 having the GPS and the IMU in the above embodiment, but the yaw rate may be detected by a yaw rate sensor installed in the vehicle 1. The self-positioning device 4 is a device having the GPS and the IMU in the above embodiment, but it may also be a device using SLAM (Simultaneous Localization And Mapping). In a case of the self-positioning device 4 using the SLAM, the self-positioning device 4 has a three-dimensional scanner or camera that scans its surrounding environment.

In addition, according to the present disclosure, safety of automated driving can be improved by properly performing its calibration process for automatic turning control of a vehicle. Thus, for example, it contributes the Goal 9 of the Sustainable Development Goals (SDGs) initiated by the United Nations, "Develop resilient infrastructure, promote inclusive and sustainable industrialization, and expand technological innovation."

The present application claims a priority based on a Japanese Patent Application No. 2022-69844, file on April 21, 2022, and the entire contents of the application are incorporate herein by reference.

EXPLANATIONS OF REFERENCE SIGNS

1 vehicle
2 steering robot
4 self-position detecting device
5 controller
X driving area
Y perimeter (of the driving area X)

**Claims**

1. A setting method of turning characteristics of an automated vehicle driving system, the method comprising:

   automatically generating driving patterns for acquisition of a parameter of turning characteristics;
   acquiring data concerning the turning characteristics of a vehicle through automated driving of the vehicle with the generated driving patterns; and
   setting the parameter based on the acquired data.

2. The setting method of turning characteristics according to claim 1, wherein
   the vehicle automated driving system is configured by installing an automated driving robot on the vehicle.

3. The setting method of turning characteristics according to claim 1 or 2, wherein

   a driving area for the automated driving with the driving patterns is acquired by driver's driving of the vehicle along a perimeter of the driving area before automatically generating the driving patterns, and then
   the driving patterns are automatically generated in the driving area.

4. The setting method of turning characteristics according to claim 3, wherein
   the parameter is a turning curvature or a turning radius of the vehicle relative to a steering angle of a steering wheel of the vehicle.

5. The setting method of turning characteristics according to claim 3, wherein
the parameter is a yaw rate of the vehicle relative to a steering angle of a steering wheel of the vehicle.

6. The setting method of turning characteristics according to claim 3, wherein
the parameter is a time constant for a response delay of a yaw rate of the vehicle.

7. The setting method of turning characteristics according to claim 3, wherein
the parameter is a stability factor concerning turning of the vehicle.

8. An automated vehicle driving system comprising:

a steering robot that rotates a steering wheel of a vehicle;
a self-position detecting device that detects a self-position of the vehicle; and
a controller that controls the automated vehicle driving system,
wherein the controller is configured to automatically generate driving patterns for acquisition of a parameter of turning characteristics, to acquire data concerning the turning characteristics of the vehicle by using the self-position detecting device while driving the vehicle automatedly with the generated driving patterns by controlling the steering robot, and to set the parameter based on the acquired data.

9. The automated vehicle driving system according to claim 8, wherein
the steering robot is post-installed on the vehicle.

FIG. 1

FIG. 2

FIG. 3

FIG. 4

FIG. 5

R2
Z1
Z2
Y
1
X
Z3

FIG. 6

TURNING CURVATURE [1/m]

−720   −360   0   360   720

STEERING ANGLE [deg]

# FIG. 7

```
                    ┌─────────────┐
                    │    START    │
                    └─────────────┘
                           │
                           ▼
        ┌──────────────────────────────────────────┐
        │            INITIAL SETTING                │ ～ S1
        │ (WHEELBASE, DEFAULT TURNING RADIUS)       │
        └──────────────────────────────────────────┘
                           │
                           ▼
        ┌──────────────────────────────────────────┐
        │ MANNED DRIVING ALONG PERIMETER OF DRIVING AREA │ ～ S2
        │ (AREA SETTING, ACCELERATOR/BRAKE SETTING) │
        └──────────────────────────────────────────┘
                           │
                           ▼
        ┌──────────────────────────────────────────┐
        │ MANNED DRIVING TO DRIVE START POSITION    │ ～ S3
        └──────────────────────────────────────────┘
                           │
                           ▼
        ┌──────────────────────────────────────────┐
        │ AUTOMATIC GENERATION OF DRIVING PATTERNS  │ ～ S4
        └──────────────────────────────────────────┘
                           │
                           ▼                    ～ S5
        ┌──────────────────────────────────────────┐
        │ AUTOMATED DRIVING ACCORDING TO DRIVING PATTERNS │
        │ (ACQUISITION OF TURNING CHARACTERISTICS DATA)   │
        └──────────────────────────────────────────┘
                           │
                           ▼               ～ S6
                    ╱─────────────────╲
                   ╱  ALL DRIVING PATTERNS ╲      NO
                   ╲   ARE COMPLETED?     ╱────────┐
                    ╲─────────────────╱            │
                           │ YES                   │
                           ▼                       │
        ┌──────────────────────────────────────────┐
        │    CALCULATION OF PARAMETER FOR           │ ～ S7
        │    AUTOMATED STEERING CONTROL             │
        └──────────────────────────────────────────┘
                           │
                           ▼
                    ┌─────────────┐
                    │     END     │
                    └─────────────┘
```

# FIG. 8

| | INTERNATIONAL SEARCH REPORT | International application No. |
|---|---|---|
| | | **PCT/JP2023/014973** |

**A. CLASSIFICATION OF SUBJECT MATTER**

*B62D 6/00*(2006.01)i; *B60W 40/114*(2012.01)i; *B60W 40/12*(2012.01)i; *B60W 60/00*(2020.01)i
FI: B62D6/00; B60W40/114; B60W40/12; B60W60/00

According to International Patent Classification (IPC) or to both national classification and IPC

**B. FIELDS SEARCHED**

Minimum documentation searched (classification system followed by classification symbols)

B62D6/00; B60W40/114; B60W40/12; B60W60/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-131052 A (TOYOTA MOTOR CORP) 25 May 2006 (2006-05-25)<br>entire text, all drawings | 1-9 |
| A | JP 2005-104346 A (MITSUBISHI FUSO TRUCK & BUS CORP) 21 April 2005 (2005-04-21)<br>entire text, all drawings | 1-9 |
| A | JP 2010-089577 A (MITSUBISHI ELECTRIC CORP) 22 April 2010 (2010-04-22)<br>entire text, all drawings | 1-9 |
| A | JP 2020-192938 A (HITACHI AUTOMOTIVE SYSTEMS LTD) 03 December 2020 (2020-12-03)<br>entire text, all drawings | 1-9 |
| A | US 2012/0215395 A1 (AZNAVORIAN, Todd S.) 23 August 2012 (2012-08-23)<br>entire text, all drawings | 1-9 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/014973**

| Patent document cited in search report | | | Publication date (day/month/year) | Patent family member(s) | | | Publication date (day/month/year) |
|---|---|---|---|---|---|---|---|
| JP | 2006-131052 | A | 25 May 2006 | (Family: none) | | | |
| JP | 2005-104346 | A | 21 April 2005 | US | 2005/0102085 | A1 | |
| | | | | entire text, all drawings | | | |
| | | | | DE | 102004046986 | A1 | |
| | | | | KR | 10-2005-0031931 | A | |
| | | | | CN | 1603193 | A | |
| JP | 2010-089577 | A | 22 April 2010 | (Family: none) | | | |
| JP | 2020-192938 | A | 03 December 2020 | (Family: none) | | | |
| US | 2012/0215395 | A1 | 23 August 2012 | WO | 2012/110542 | A1 | |

Form PCT/ISA/210 (patent family annex) (January 2015)

**REFERENCES CITED IN THE DESCRIPTION**

**Patent documents cited in the description**

- JP 2017177847 A

- JP 2022069844 A